Europäisches Patentamt

European Patent Office

Office européen des brevets

(11) **EP 1 179 729 A1**

(19)

(12) # DEMANDE DE BREVET EUROPEEN

(43) Date de publication:
**13.02.2002 Bulletin 2002/07**

(51) Int Cl.[7]: **G01N 21/21**, G01B 11/06

(21) Numéro de dépôt: **01402132.3**

(22) Date de dépôt: **07.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.08.2000 FR 0010532**

(71) Demandeur: **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
- **Drevillon, Bernard**
  **92140 Clamart (FR)**
- **Heitz, Thibaut**
  **92260 Fontenay-Aux-Roses (FR)**
- **Rostaing, Jean-Claude**
  **78530 Buc (FR)**

(74) Mandataire: **Mellul-Bendelac, Sylvie Lisette et al**
**L'Air Liquide, Service Propriété Industrielle, 75, Quai d'Orsay**
**75321 Paris Cedex 07 (FR)**

(54) **Procédé de contrôle en temps réel de l'élaboration d'une structure en couches minces par mesure ellipsométrique**

(57)    Procédé de contrôle en temps réel de l'élaboration d'une structure en couches minces comportant un substrat par mesure ellipsométrique dans lequel :

- on mesure des variables directement liées au rapport ellipsométrique $\rho = tg\, \Psi\, exp(i\Delta)$,
- on compare lesdites variables à des valeurs de référence.

La comparaison porte sur la longueur de la trajectoire parcourue à un instant t dans l'espace des variables par rapport à un point initial à l'instant $t_o$, pour chaque couche participant à la structure en couches minces.

FIG.2

EP 1 179 729 A1

## Description

La présente invention concerne un procédé de contrôle en temps réel de l'élaboration d'une structure en couches minces par mesure ellipsométrique.

L'ellipsométrie est une technique de mesure non destructive permettant la caractérisation optique d'un échantillon disposant d'une surface spéculaire ou quasi spéculaire.

L'ellipsométrie peut être mise en oeuvre in situ et permet alors l'étude des mécanismes de croissance des couches minces, de formation des interfaces et le contrôle de procédé d'élaboration de ces couches et interfaces. L'ellipsométrie est, par exemple, utilisée pour l'étude et le contrôle de l'élaboration de composants et de matériaux semi-conducteurs.

Les mesures ellipsométriques peuvent être réalisées à une longueur d'onde fixe, ou à plusieurs longueurs d'onde (ellipsométrie spectroscopique). Selon le domaine de longueur d'onde des composants optiques utilisés (source, détecteur...), il est possible d'accéder à des propriétés différentes des couches, des matériaux ou d'explorer des matériaux différents.

Dans le domaine de l'ultraviolet et du visible, la profondeur de pénétration du rayonnement est souvent faible. Cela constitue des conditions favorables pour l'étude des surfaces et des interfaces, et pour les contrôles en temps réel. Cela ne permet pas toujours d'accéder aux propriétés volumiques des couches et des matériaux qui peuvent, alors, être obtenues par des mesures dans le domaine du proche infrarouge.

L'infrarouge lointain est bien adapté aux mesures d'absorption vibrationnelles (liaisons chimiques).

Pour la réalisation des mesures ellipsométriques, la surface d'un échantillon est éclairée par un faisceau lumineux et l'état de polarisation d'un faisceau incident $i$ est comparé à celui du faisceau réfléchi $r$ ou transmis. Un vecteur de polarisation E est généralement représenté par ses projections $E_s$ et Ep, respectivement perpendiculaires et parallèles au plan d'incidence. Les projections $E_p$ et $E_s$ sont des amplitudes complexes.

Dans le domaine de l'ellipsométrie, on représente généralement le rapport $\rho = (E_p/E_s)^r/(E_p/E_s)^i$, significatif des modifications de l'état de polarisation produites par la surface étudiée, sous la forme :

$$\rho = \text{tg}\Psi.\exp(i\Delta) = (E_p/E_s)^r/(E_p/E_s)^i$$

Les deux angles $\Psi$ et $\Delta$ décrivant le changement de polarisation sont ainsi combinés dans la quantité complexe $\rho$.

Les angles $\Psi$ et $\Delta$, donc $\rho$, dépendent à la fois de propriétés de l'échantillon, de l'angle d'incidence du faisceau et de la longueur d'onde de mesure. L'expression de $\Psi$ et $\Delta$, ou de $\rho$, en fonction de ces paramètres, est donnée par les équations de Fresnel citées, par exemple, par D. Chariot et A. Maruani dans Appl. Opt. 24, 3368, 1985.

Dans un ellipsomètre à modulation de phase, un rayon incident a sa polarisation modulée par une différence de phase générée entre deux axes propres d'un modulateur de phase. Le déphasage $\delta(t)$ évolue typiquement avec le temps $t$ selon une loi périodique de pulsation $\omega$, $\delta(t)$ étant proportionnel au premier ordre à sin $(\omega t)$.

Dans un ellipsomètre à modulation de phase, l'intensité d'un flux lumineux réfléchi par un échantillon permet de déduire, de façon connue, les valeurs de $\Psi$ et $\Delta$.

L'ellipsométrie, et plus particulièrement l'ellipsométrie spectroscopique à modulation de phase (ESMP), est une technique performante pour mesurer en temps réel la croissance de couches sur un substrat. Cette technique présente l'avantage de ne pas perturber le procédé en cours. Elle est par ailleurs très sensible à des paramètres physiques de l'échantillon mesuré, tels que l'épaisseur $d$ de la couche et l'indice $n$ de réfraction. D'autre part, elle permet des mesures rapides (Bernard Drevillon, "Progress in crystal growth on characterisation of material", vol. 27, 1998, p. 1-87).

Selon un procédé connu, les angles $\Psi$ et $\Delta$, ou $\rho$, sont déduits des mesures d'amplitude. Ces quantités $\Psi$ et $\Delta$ dépendent de paramètres physiques de l'échantillon mesuré, tels que l'indice n et l'épaisseur d de la couche superficielle. Dans le cas de matériaux transparents, ces derniers peuvent ainsi être calculés ensuite à partir de $\Psi$ et $\Delta$, par une inversion directe des équations de Fresnel. Cette inversion doit être en général réalisée de manière itérative.

L'application à un contrôle de croissance in situ de l'ellipsométrie spectroscopique à modulation de phase est, par exemple, décrite dans le document "High-speed spectral ellipsometry for in situ diagnostics and process control", Duncan et al., J. Vac. Sci. Technol. B., 12(4), 1994.

En effet, il est souvent difficilement réalisable de déposer une structure constituée de plusieurs couches d'épaisseur et d'indice de réfraction différent, par exemple par PECVD (Plasma Enhanced Chemical Vapour Deposition), pour obtenir la précision nécessaire (environ 2 %) exigée pour la réalisation de filtres optiques par exemple. Il est insuffisant de choisir les temps de dépôt de chaque couche à partir des vitesses de croissance de ces couches mesurées au cours d'expériences préalables. Un contrôle en temps réel, avec un asservissement sur les paramètres du dépôt devient alors indispensable.

Différentes directions ont d'ores et déjà été suivies pour améliorer ces méthodes de mesure par ellipsométrie et les appliquer à de tels procédés industriels.

En particulier, le brevet FR-2.731.074 propose de faire, au cours d'un procédé de fabrication de couches, des estimations des paramètres physiques desdites couches à partir des mesures faites par ellipsométrie et de les rapprocher, par méthode d'ajustement par la méthode des moindres carrés de valeurs théoriques prises en référence.

Plus particulièrement, ces méthodes nécessitent généralement d'effectuer des calculs intermédiaires à partir des mesures brutes (comme des calculs interférentiels prenant en compte la totalité de la couche déposée), ce qui ralentit considérablement leur mise en oeuvre.

Une autre méthode a également été proposée (M. Kildemo, P. Bulkin, S. Deniau et B. Drevillon, Appl. Phys. Lett. 68, 1996, p. 3395). Elle consiste à mesurer en temps réel, dans le plan ($I_s$, $I_c$), où $I_s$ et $I_c$ sont des fonctions connues qui seront rappelées plus loin, la distance entre le point mesuré et le point théorique correspondant à la fin de chaque sous-couche.

Cette méthode nécessite une connaissance très précise de chaque fin de trajectoire. Elle a donc l'inconvénient d'être très sensible aux erreurs systématiques, notamment dans les applications mettant en oeuvre des longueurs d'onde multiples. Ces erreurs systématiques (comme celles dues à des défauts de calibration de l'ellipsomètre) vont avoir tendance à écarter artificiellement la trajectoire expérimentale de la trajectoire théorique, ce qui peut réduire considérablement la précision du contrôle.

Elle nécessite aussi une connaissance optique précise du substrat, ce qui est souvent difficile dans le cas de matériaux hétérogènes et peu absorbants comme les verres usuels.

Ces différentes méthodes présentent donc chacune des inconvénients, soit qu'elles soient lentes, soit qu'elles manquent de précision.

Le but de la présente invention est de remédier à ces inconvénients en proposant un procédé de contrôle en temps réel de l'élaboration de structures en couches minces par mesure ellipsométrique qui exploite les variations temporelles de la mesure ellipsométrique brute, c'est-à-dire sans avoir recours aux inversions ou paramétrisations optiques nécessaires pour accéder aux paramètres optiques à partir de $\Psi$ et $\Delta$.

A cet effet, l'invention concerne un procédé de contrôle en temps réel de l'élaboration d'une structure en couches minces par mesure ellipsométrique dans lequel :

- on mesure des variables directement liées au rapport ellipsométrique $\rho = \tan \Psi \exp(i\Delta)$,
- on compare lesdites variables à des valeurs de référence.

Selon l'invention, la comparaison porte sur la longueur de la trajectoire parcourue à un instant t dans l'espace des variables par rapport à un point initial à l'instant $t_0$, pour chaque couche participant à la structure en couches minces.

On entend ici par variables directement liées au rapport ellipsométrique $\rho$, des variables directement accessibles à partir du signal fourni par le détecteur de l'ellipsomètre sans qu'il ne soit nécessaire de recourir à des traitements mathématiques lourds tels que des inversions d'équations et des ajustements par la méthode des moindres carrés.

Le paramètre pris en considération pour contrôler l'élaboration des structures en couches minces est la longueur, pour chaque couche, de la trajectoire à un instant t, qui sera contrôlée en agissant sur les paramètres de fabrication des couches.

La présente invention concerne également les caractéristiques qui ressortiront au cours de la description qui va suivre et qui devront être considérées isolément ou selon toutes leurs combinaisons techniques possibles :

- lesdites variables sont une combinaison des paramètres $\Psi$ et $\Delta$,
- lesdites variables sont une combinaison de fonctions trigonométriques des paramètres $\Psi$ et $\Delta$,
- la mesure ellipsométrique est à modulation de phase,

On entend par ellipsométrie à modulation de phase, la mesure obtenue par un ellipsomètre comprenant un modulateur photoélastique ou électro-optique placé après un polariseur d'entrée. La mesure est obtenue par l'exploitation du signal fourni par un photodétecteur placé en sortie, après réflexion du signal lumineux d'excitation sur l'échantillon et traversé d'un analyseur.

Le fonctionnement symétrique de ces dispositifs étant bien connu, le modulateur photoélastique peut éventuellement être placé sur le faisceau lumineux après réflexion sur l'échantillon.

- les variables mesurées sont respectivement

$I_s = (\sin 2\Psi \sin \Delta)$ et $I_c = (\sin 2\Psi \cos \Delta)$ ou $I_c = \cos 2\Psi$

- la mesure ellipsométrique est faite selon la méthode dite « à polariseur tournant »,

Par mesure ellipsométrique faite selon la méthode dite « à polariseur tournant », on entend les mesures obtenues par l'utilisation d'un ellipsomètre comportant un polariseur tournant, la mesure résultant du signal fourni par le photorécepteur après réflexion sur l'échantillon et traversée d'un analyseur.

Ici encore, il est connu que le fonctionnement d'un tel ellipsomètre est symétrique et que le polariseur d'entrée peut être fixe, l'analyseur étant animé d'un mouvement de rotation.

Dans tout type d'ellipsomètre, un compensateur peut être introduit dans l'un des bras. On peut aussi utiliser un compensateur tournant pour réaliser la modulation.

- les variables mesurées sont tg$\Psi$ et cos$\Delta$,
- la mesure ellipsométrique est multilongueurs d'ondes,

La mesure multilongueurs d'ondes est celle obtenue par des ellipsomètres spectroscopiques qui s'opposent aux ellipsomètres monochromatiques dans lesquels la lumière d'excitation a un spectre très limité autour d'une longueur d'onde donnée.

- les valeurs de référence sont une trajectoire déterminée théoriquement,
- les valeurs de référence sont une trajectoire déterminée expérimentalement,
- les valeurs de référence sont des points discrets correspondant à des instants de l'élaboration des couches minces par rapport au temps $t_o$, $t_o$ peut correspondre au début du dépôt sur le substrat ou bien au début de la croissance d'une des couches constituant la structure,
- la trajectoire parcourue est ajustée par un polynôme de degré compris entre 1 et 5,
- les valeurs de référence sont déterminées par la mesure, par la succession des étapes suivantes :

    - mesure d'une couche connue sur un substrat simple,
    - mesure de la même couche connue sur un substrat industriel,
    - mesure de la structure en couches minces à contrôler.

L'invention sera décrite ci-après plus en détail en référence aux dessins annexés dans lesquels :

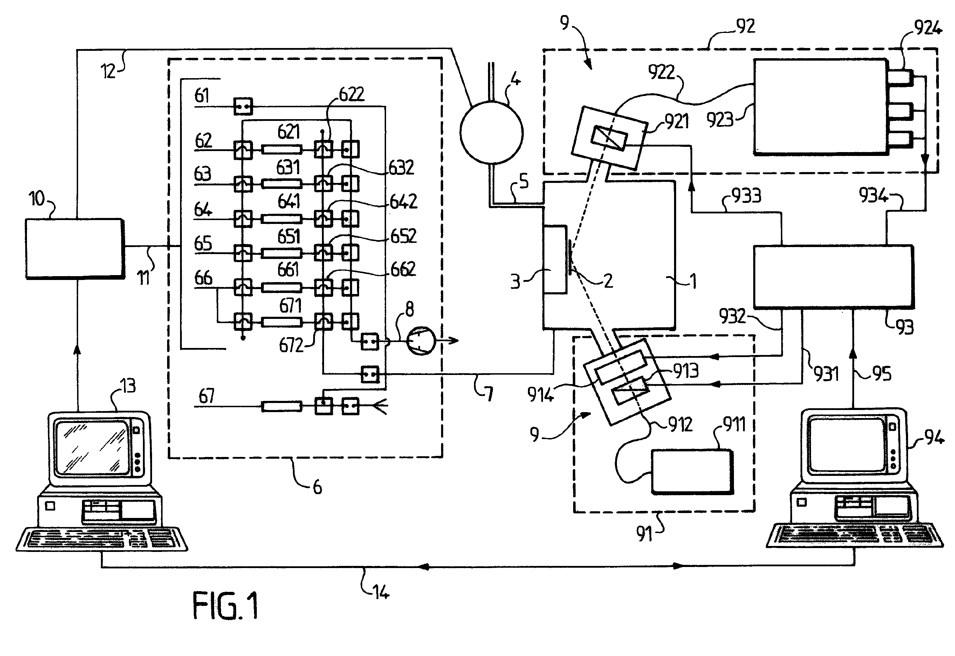

- la figure 1 est une représentation simplifiée d'une installation de fabrication mettant en oeuvre l'invention ;
- la figure 2 est une représentation schématique, dans le repère $I_s$, $I_c$, d'une trajectoire expérimentale par rapport à une trajectoire théorique dans une hypothèse simplifiée, la structure étant composée de différentes couches i-1, i, i+1 ;
- la figure 3 est la représentation schématique de la longueur de la trajectoire pour une structure à couches minces en fonction du temps ;
- la figure 4 est la représentation d'une trajectoire réelle dans le repère $I_s$, $I_c$ correspondant à une longueur d'onde, au dépôt d'un filtre antireflet sur du verre Corning 7059 ;
- la figure 5 représente la caractérisation comparée, par spectrophotométrie du filtre, objet de la figure 4.

Les procédés d'élaboration visés ici sont essentiellement le dépôt plasma de couches minces et de structures multicouches ou à gradients de composition (filtres optiques), ou bien la gravure (plasma) de composants micro-électroniques. Plus généralement, la méthode de contrôle proposée, principalement appliquée aux procédés de déposition PECVD (Plasma Enhanced Chemical Vapour Deposition), peut s'appliquer à d'autres procédés d'élaboration utilisant des gaz ou des composés métallorganiques (CVD : Chemical Vapor Deposition et MOCVD: Metallorganic Chemical Vapor Deposition) ou se généraliser à des procédés basés sur l'utilisation de sources ou cibles solides (pulvérisation cathodique, évaporation sous vide, épitaxie par jet moléculaire...). Dans ce dernier cas, la contre-réaction à partir des mesures ellipsométriques n'est pas effectuée sur une gestion de gaz, mais sur d'autres paramètres de contrôle (courants, température...).

L'installation de fabrication comprend une chambre à plasma 1 dans laquelle est placé le substrat 2 qui est, par exemple, l'élément d'origine de la plaquette de semi-conducteurs à fabriquer. Ce substrat est fixé sur un support 3. La pression réduite dans la chambre à plasma 1 est obtenue par l'effet de la pompe 4, reliée à celle-ci par la canalisation 5. Le panneau de gaz 6 alimente par la canalisation 7, la chambre à plasma 1. Il est relié à des alimentations de gaz, respectivement 61 en azote $N_2$, 62 en ammoniaque $NH_3$, 63 en hydrogène $H_2$, 64 en méthane $CH_4$, 65 en hélium He, 66 en silane $SiH_4$, 67 en oxygène $O_2$ ou en protoxyde d'azote $N_2O$.

Les entrées 62 à 65 sont chacune reliées à la canalisation 7 par l'intermédiaire d'un débitmètre 621, 631, 641, 651 et d'une vanne 622, 632, 642, 652.

L'alimentation en silane 66 est reliée à deux débitmètres 661 et 671 et deux vannes 662 et 672.

Des moyens classiques 8 de vidange et de purge, notamment une pompe à vide, permettent d'assurer une mise en oeuvre commode et sécuritaire du panneau de gaz. »

Le développement des couches sur le substrat 2 dans la chambre à plasma 1 est contrôlé à l'aide d'un ellipsomètre 9 composé d'une tête d'émission 91 et d'un ensemble de réception 92.

La tête d'émission 91 comporte une source multilongueur d'onde 911 reliée à une fibre optique 912 à un ensemble constitué d'un polariseur 913 et d'un modulateur de phase 914.

A titre d'exemple, un ellipsomètre spectroscopique est décrit dans le brevet européen EP-0.663.590.

L'ensemble de réception 92 comporte un polariseur-analyseur 921 relié par une fibre optique 922 à un spectrographe 923 suivi d'un ensemble de photodétecteurs 924.

L'ellipsomètre 9 est contrôlé par une unité de traitement 93 commandée par un ordinateur 94.

L'unité de traitement 93 commande le polariseur 913 et le modulateur 914, respectivement par les liaisons électriques 931 et 932, et reçoit le signal du détecteur multilongueur d'onde 924 par la liaison électrique 934. Sa liaison avec l'ordinateur 94 est assurée par la connexion électrique 95.

Le panneau de gaz 6 est contrôlé par une unité de traitement 10 à laquelle elle est reliée par les connexions 11. Cette unité de traitement 10 commande également par l'intermédiaire de la liaison 12, la pompe 4 et/ou la puissance du générateur de plasma. Elle est commandée par un micro-ordinateur 13 qui est lui-même relié au micro-ordinateur 94 par une liaison 14.

Ainsi, l'ellipsomètre 9 permet d'obtenir au travers de l'unité de traitement 93 et du micro-ordinateur 94, les caractéristiques physiques et chimiques de la couche en cours de dépôt sur le substrat 2. Ces informations sont comparées aux caractéristiques du produit à fabriquer (et éventuellement à leur variation en fonction du temps) qui ont été préalablement mises en mémoire dans l'ordinateur 94.

Le résultat de cette comparaison commande par l'intermédiaire de la connexion 14, les instructions fournies par l'ordinateur 13 à l'unité de traitement 10 qui détermine la nature et la concentration des gaz introduits par le panneau de contrôle 6 dans la chambre à plasma 2.

On réalise ainsi un contrôle complet du processus de fabrication et donc une optimisation des produits ainsi fabriqués.

L'unité de traitement 93 et l'ordinateur 94 sont programmés de telle sorte que le contrôle des propriétés de la couche déposée sur l'échantillon 2 puisse être réalisé par un petit nombre de paramètres préalablement déterminés.

Dans ce mode de réalisation, on réalise le suivi en temps réel des variables directement liées au rapport ellipsométrique généré par un ellipsomètre spectroscopique au cours de l'élaboration de couches minces, ou plus précisément d'une structure en couches minces. Cette structure en couches minces peut être constituée d'une couche unique ou de plusieurs couches (par exemple dans le cas des filtres optiques).

Le procédé de l'invention s'adapte également aux structures en couches minces à gradient d'indice, qui peuvent être décomposées en un empilement de couches élémentaires à composition fixe.

La mise en oeuvre d'une méthode ellipsométrique procure de nombreux avantages et permet des acquisitions de données rapides sans perturber le procédé d'élaboration. Par rapport aux mesures conventionnelles de réflectométrie, elle présente l'avantage d'une plus grande sensibilité liée à la détermination simultanée, à chaque longueur d'onde, de deux quantités au lieu d'une seule.

Les variables utilisées sont directement liées au rapport ellipsométrique usuel $\rho = \text{tg } \Psi \exp(i\Delta)$ où $\rho = r_p / r_s$, $r_p$ et $r_s$ étant les coefficients de réflexion de la lumière polarisée parallèle ou perpendiculaire au plan d'incidence.

Dans le cadre d'une ellipsométrie à modulation de phase, le capteur donne accès directement aux quantités $I_s = (\sin 2\Psi \sin\Delta)$ et $I_c = (\sin 2\Psi \cos\Delta)$ ou encore, de manière équivalente, $I_c = (\sin 2\Psi \cos 2\Psi)$ ou $I_c = \cos 2\Psi$.

Ce sont donc ces deux paramètres $I_s = (\sin 2\Psi \sin\Delta)$ et $I_c = (\sin 2\Psi \cos\Delta)$ ou $I_c = \cos 2\Psi$ qui sont utilisés dans ce cas particulier pour la mise en oeuvre du procédé de contrôle de l'invention.

Dans le cas d'un ellipsomètre à polariseur tournant, les paramètres ellipsométriques directement accessibles sont tg $\Psi$ et cos$\Delta$.

L'essentiel est d'utiliser des paramètres qui sont accessibles sans calculs complexes, c'est-à-dire des calculs qui nécessitent un traitement informatique prenant du temps, tels que par exemple le calcul interférométrique multicouche, l'ajustement par la méthode des moindres carrés..., et donc difficilement compatibles pour assurer une précision optimale lors du contrôle d'un procédé en temps réel.

Il va donc de soi que n'importe quelle combinaison des fonctions trigonométriques de $\Psi$ et $\Delta$ directement accessibles à la mesure peut également être utilisée pour effectuer ce contrôle.

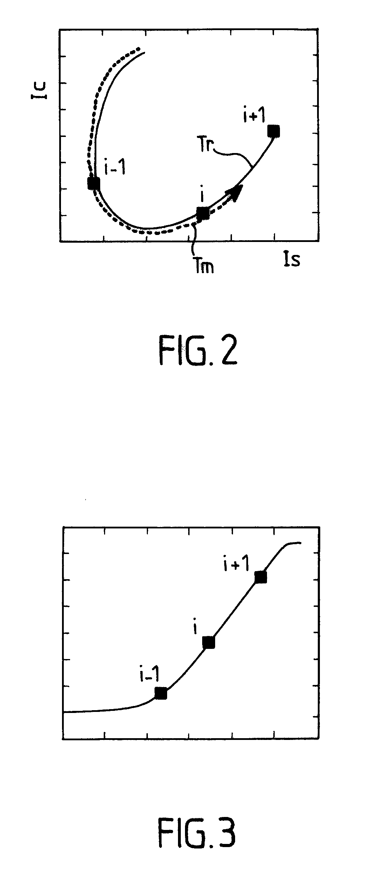

Telle que représenté sur la figure 2, la méthode consiste à comparer en temps réel, la longueur de la trajectoire mesurée $T_m$ dans le plan $(I_s, I_c)$ par rapport à la longueur d'une trajectoire de référence $T_r$ qui est attendue.

Cette comparaison peut être effectuée pour l'ensemble de la couche si elle est uniforme ou pour chacune des couches constituant la structure.

On peut ainsi contrôler la fin de chaque couche ou sous-couche et déclencher le dépôt de la couche suivante.

L'utilisation d'un ellipsomètre multilongueurs d'ondes (spectroscopique), en temps réel, permet d'améliorer la précision du procédé bien qu'il ne soit pas nécessaire. En effet, il est possible, à condition de ne pas avoir besoin d'une précision optimale, de mettre en oeuvre le procédé de l'invention avec un ellipsomètre monolongueur d'onde.

En pratique, on effectue d'abord la mesure ellipsométrique du point initial lors du démarrage de l'élaboration de la structure en couches minces, la trajectoire de référence $t_r$ étant calculée en tenant compte de cette mesure initiale. Pour éliminer l'influence des bruits expérimentaux lors de la comparaison en temps réel, les mesures de $I_s$ et $I_c$ en fonction du temps sont avantageusement ajustées par un polynôme, par exemple du second degré, sur une fenêtre de largeur variable correspondant typiquement à une dizaine de nanomètres.

Avec un ellipsomètre multilongueurs d'onde, on calcule alors la somme des différences mesurées à chaque longueur d'onde, des longueurs de référence et expérimentales. Lorsque cette différence change de signe, on déclenche le dépôt de la couche suivante.

Les mesures étant toujours affectées par des fluctuations rapides non significatives, l'ajustement par un polynôme consiste à lisser la courbe mesurée en la remplaçant par la courbe la plus proche, dans une fenêtre temporelle donnée, représentée par un polynôme de degré fixé, en général compris entre 1 et 5 et préférentiellement du deuxième degré.

Cette méthode est très générale, elle peut s'appliquer aux structures en couches minces transparentes déposées sur un substrat quelconque (transparent ou absorbant), elle s'applique quelle que soit l'épaisseur de la structure. Elle peut également être étendue au cas de couches peu absorbantes, ou même à la caractérisation directe d'un substrat.

Dans certains cas, en particulier lorsqu'on cherche à déposer des couches sur un substrat complexe, transparent et inhomogène (comme un verre usuel), il peut s'avérer difficile de déterminer la trajectoire de référence.

On procède alors de la manière suivante :

- Dans une première étape, on dépose une couche connue sur un substrat dit substrat simple permettant des mesures ellipsométriques maîtrisées de ladite couche. Un tel substrat est soit un substrat opaque, par exemple du silicium monocristallin, soit un substrat transparent ou partiellement transparent homogène, c'est-à-dire par exemple de la silice fondue ou un verre borosilicate (Corning 7059 par exemple).

On réalise ainsi un ensemble de mesures ellipsométriques permettant de caractériser complètement la couche et son substrat. A cet effet, on réalise d'abord une mesure ellipsométrique classique sur le substrat puis ensuite, pendant le dépôt de la couche transparente, on mesure les paramètres $I_s$, $I_c$ et on acquiert, généralement pour plusieurs longueurs d'onde, un ensemble de courbes représentant les variations des paramètres $I_s$, $I_c$ pour chaque longueur d'onde, en fonction du temps. Cela permet de calculer la vitesse de dépôt et l'indice de réfraction de la couche à chaque longueur d'onde. Ces valeurs seront utilisées, par la suite, pour décrire la croissance de cette couche.

- Dans une deuxième étape, on dépose la même couche, c'est-à-dire en utilisant les mêmes gaz selon le même procédé que dans l'étape précédente, sur le substrat complexe dit substrat industriel que l'on voudra utiliser dans le processus industriel.

Ici encore, on enregistre, pour différentes longueurs d'onde, les variations des paramètres $I_s$, $I_c$ au cours du temps pendant le dépôt et plus particulièrement la longueur $L_2(I_s, I_c)(t)$.

On en déduit alors, par exemple par un ajustement par la méthode des moindres carrés portant sur les longueurs $L_2(I_s, I_c)(t)$, l'indice n et le coefficient d'absorption k effectifs du substrat pour chaque longueur d'onde.

On peut améliorer la précision en utilisant des relations de dispersion qui donnent les variations $n(\lambda)$ et $k(\lambda)$ du substrat. On peut également utiliser des mesures de réflexion et transmission, en incidence normale, pour caractériser le substrat industriel et la couche.

- Dans une troisième étape, à partir de la connaissance des paramètres n, k effectifs du substrat pour les différentes longueurs d'onde du substrat, il est possible de déduire la courbe théorique $L_3(I_s, I_c)(t)$ pour une structure de couche particulière que l'on déposera pendant le processus industriel, selon le procédé de l'invention.

La figure 2 représente schématiquement une trajectoire mesurée $T_m$ par rapport à une trajectoire théorique ou de référence $T_r$. On a représenté le dépôt d'une couche i de la structure entre la couche i-1 et la couche i+1. Pour chaque couche i, on compare, selon l'invention, la longueur curviligne de la couche $T_m$ à celle de la courbe $T_r$ entre le point i-1 et le point i.

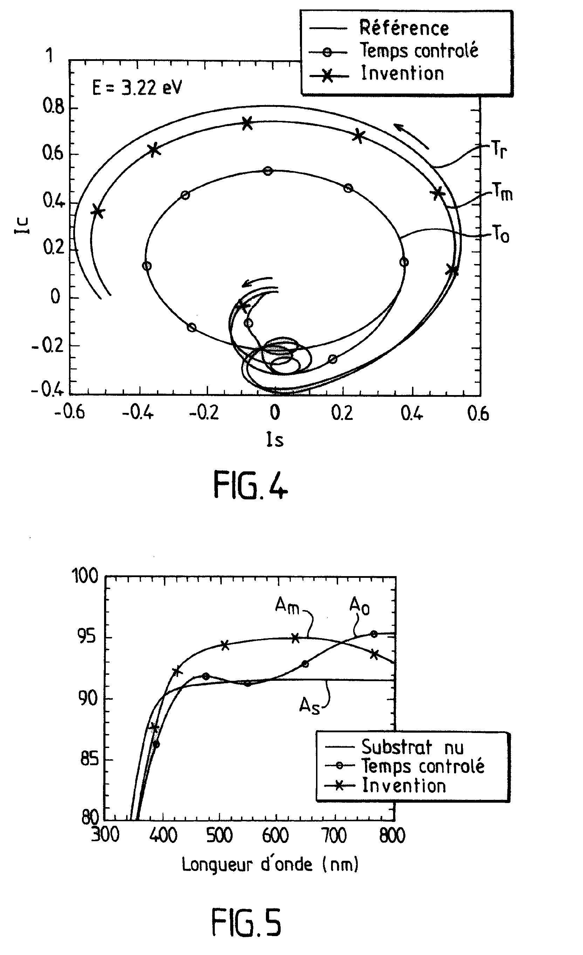

La figure 4 est le résultat d'une expérimentation réelle. La courbe de référence est désignée par $T_r$. La courbe mesurée, selon l'invention, telle qu'indiquée plus haut, est désignée par $T_m$ (elle porte des x). La courbe désignée par $T_o$ (qui porte des o) est le résultat des mesures ellipsométriques faites sur la même structure de couches, celles-ci étant déposées, non pas conformément à l'invention mais selon un procédé traditionnel en appliquant un procédé où l'on contrôle le temps de dépôt de chaque couche par rapport à un temps de référence prédéterminé. On constate que la courbe $T_o$ s'éloigne rapidement de la courbe théorique de référence $T_r$ alors que la courbe $T_m$ et $T_r$ sont proches l'une de l'autre. La trajectoire de la figure 4 correspond au dépôt d'un filtre antireflet sur un substrat de verre.

La figure 5 est également significative du résultat obtenu. On a mesuré par spectrophotométrie les propriétés de la structure de couches finalement réalisée.

$A_s$ désigne la courbe pour le substrat nu.

$A_m$ désigne la courbe pour la structure obtenue selon l'invention, correspondant à la courbe Tm de la figure 4.

$A_o$ désigne la courbe pour la structure obtenue selon l'art antérieur, correspondant à la courbe To de la figure 4.

On constate que l'utilisation de l'invention diminue considérablement le coefficient de réflexion du substrat, ce qui n'est pas le cas selon l'art antérieur.

## Revendications

**1.** Procédé de contrôle en temps réel de l'élaboration d'une structure en couches minces comportant un substrat par mesure ellipsométrique dans lequel :

- on mesure des variables directement liées au rapport ellipsométrique $\rho = \mathrm{tg}\,\Psi \exp(i\Delta)$,
- on compare lesdites variables à des valeurs de référence,

**caractérisé en ce que** la comparaison porte sur la longueur de la trajectoire parcourue à un instant t dans l'espace des variables par rapport à un point initial à l'instant $t_o$, pour chaque couche participant à la structure en couches minces.

2. Procédé de contrôle selon la revendication 1, **caractérisé en ce que** lesdites variables sont une combinaison des paramètres $\Psi$ et $\Delta$.

3. Procédé de contrôle selon la revendication 1, **caractérisé en ce que** lesdites variables sont une combinaison de fonctions trigonométriques des paramètres $\Psi$ et $\Delta$.

4. Procédé de contrôle selon l'une des revendications 1 à 3, **caractérisé en ce que** la mesure ellipsométrique est à modulation de phase.

5. Procédé de contrôle selon la revendication 4, **caractérisé en ce que** les variables mesurées sont respectivement

$I_s = (\sin 2\Psi \sin\Delta)$ et $I_c = (\sin 2\Psi \cos\Delta)$ ou $I_c = \cos 2\Psi$

6. Procédé de contrôle selon l'une des revendications 1 à 3, **caractérisé en ce que** la mesure ellipsométrique est faite selon la méthode dite « à polariseur tournant ».

7. Procédé de contrôle selon la revendication 6, **caractérisé en ce que** les variables mesurées sont $tg\Psi$ et $\cos\Delta$.

8. Procédé de contrôle selon l'une quelconque des revendications 1 à 7, **caractérisé en ce que** la mesure ellipsométrique est multilongueurs d'ondes.

9. Procédé de contrôle selon l'une quelconque des revendications 1 à 8, **caractérisé en ce que** les valeurs de référence sont une trajectoire déterminée théoriquement.

10. Procédé de contrôle selon l'une quelconque des revendications 1 à 8, **caractérisé en ce que** les valeurs de référence sont une trajectoire déterminée expérimentalement.

11. Procédé de contrôle selon l'une quelconque des revendications 1 à 10, **caractérisé en ce que** les valeurs de référence sont des points discrets correspondant à des instants de l'élaboration des couches minces par rapport au temps $t_o$.

12. Procédé de contrôle selon l'une quelconque des revendications 1 à 11, **caractérisé en ce que** la trajectoire parcourue est ajustée par un polynôme de degré compris entre 1 et 5.

13. Procédé de contrôle selon l'une quelconque des revendications 1 à 12, **caractérisé en ce que** les valeurs de référence sont déterminées par la mesure, par la succession des étapes suivantes :

    - mesure d'une couche connue sur un substrat simple,
    - mesure de la même couche connue sur un substrat industriel,
    - mesure de la structure en couches minces à contrôler.

FIG.1

FIG.2

FIG.3

FIG.4

FIG.5

**Office européen
des brevets**

**RAPPORT DE RECHERCHE EUROPEENNE**

Numéro de la demande

EP 01 40 2132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | KILDEMO M ET AL: "A direct robust feedback method for growth control of optical coatings by multiwavelength ellipsometry" THIN SOLID FILMS,CH,ELSEVIER-SEQUOIA S.A. LAUSANNE, vol. 313-314, 13 février 1998 (1998-02-13), pages 484-489, XP004133035 ISSN: 0040-6090 * abrégé * * page 485, colonne de gauche, alinéa 3 * * page 485, colonne de droite, alinéa 3 * * page 486, colonne de gauche, alinéa 2 - colonne de droite, alinéa 1 * * figure 1 * | 1-6,8,9, 11 | G01N21/21 G01B11/06 |
| A | KILDEMO M ET AL: "Real time control of the growth of silicon alloy multilayers by multiwavelength ellipsometry" THIN SOLID FILMS,CH,ELSEVIER-SEQUOIA S.A. LAUSANNE, vol. 290-291, 15 décembre 1996 (1996-12-15), pages 46-50, XP004173288 ISSN: 0040-6090 * figure 4 *  -/-- | 1-13 | **DOMAINES TECHNIQUES RECHERCHES (Int.Cl.7)** G01N G01B |

Le présent rapport a été établi pour toutes les revendications

| Lieu de la recherche | Date d'achèvement de la recherche | Examinateur |
|---|---|---|
| LA HAYE | 24 octobre 2001 | Verdoodt, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

# RAPPORT DE RECHERCHE EUROPEENNE

Numéro de la demande

EP 01 40 2132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | BREVILLON B: "PHASE MODULATED ELLIPSOMETRY FROM THE ULTRAVIOLET TO THE INFRARED: IN SITU APPLICATION TO THE GROWTH OF SEMICONDUCTORS" PROGRESS IN CRYSTAL GROWTH AND CHARACTERIZATION OF MATERIALS,GB,ELSEVIER PUBLISHING, BARKING, vol. 27, no. 1, 1993, pages 1-87, XP000579689 ISSN: 0960-8974 * page 32 - page 41 * | 1 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 24 octobre 2001 | Verdoodt, E |